(19) Europäisches Patentamt
European Patent Office
Office européen des brevets

(11) EP 2 573 159 A1

(12) EUROPEAN PATENT APPLICATION
published in accordance with Art. 153(4) EPC

(43) Date of publication:
**27.03.2013 Bulletin 2013/13**

(21) Application number: **11783652.8**

(22) Date of filing: **20.05.2011**

(51) Int Cl.:
***C11D 11/00*** *(2006.01)* ***A01N 25/00*** *(2006.01)*
***A01N 25/12*** *(2006.01)* ***A01N 59/00*** *(2006.01)*
***A01P 3/00*** *(2006.01)* ***C11D 7/10*** *(2006.01)*
***C11D 7/32*** *(2006.01)* ***C11D 17/06*** *(2006.01)*

(86) International application number:
**PCT/JP2011/061644**

(87) International publication number:
**WO 2011/145720 (24.11.2011 Gazette 2011/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2010 JP 2010117395**

(71) Applicant: **Lion Corporation**
**Tokyo 130-8644 (JP)**

(72) Inventors:
- **SUEKUNI, Tomonari**
  **Tokyo 130-8644 (JP)**
- **KUBOZONO, Takayasu**
  **Tokyo 130-8644 (JP)**
- **HORIE, Kodo**
  **Tokyo 130-8644 (JP)**

(74) Representative: **Vuillermoz, Bruno et al**
**Cabinet Laurent & Charras**
**"Le Contemporain"**
**50, Chemin de la Bruyère**
**69574 Dardilly Cédex (FR)**

# (54) METHOD FOR PRODUCING POWDER MIXTURE

(57) There is provided a method for producing a powder mixture containing an alkali metal salt that exhibits basicity in an aqueous solution (component (A)); at least one type of metal salt selected from the salts of copper, manganese, iron, cobalt and zinc (component (B)); and a compound represented by the following general formula (1) (component (C)), including spraying and mixing an aqueous solution of metal which is an aqueous solution of the aforementioned component (B) with a powder of the aforementioned component (A), and then mixing a powder of the aforementioned component (C) therewith. According to the present invention, it is possible to provide a method for producing a powder mixture which can easily produce a powder mixture that exhibits excellent solubility in water even when containing a basic alkali metal salt and a metal salt:

[Chemical Formula 1]

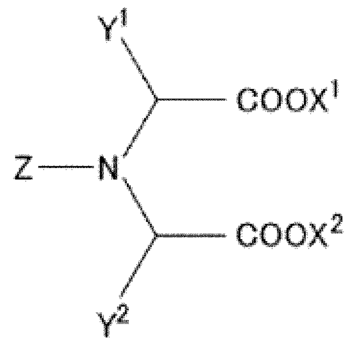

···(1)

EP 2 573 159 A1

FIG. 1

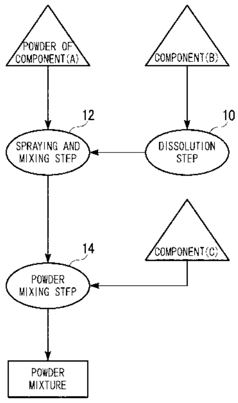
POWDER OF COMPONENT(A)
COMPONENT(B)
12
10
SPRAYING AND MIXING STEP
DISSOLUTION STEP
14
COMPONENT(C)
POWDER MIXING STEP
POWDER MIXTURE

## Description

[Technical Field]

The present invention relates to a method for producing a powder mixture.
Priority is claimed on Japanese Patent Application No. 2010-117395, filed May 21, 2010, the content of which is incorporated herein by preference.

[Background Art]

Bleach compositions have been used for washing clothing, living space, or the like. In addition, in recent years, there is an increase in the awareness of keeping the clothing or living space clean, and not only the removal of dirt but also decontamination or sterilization (collectively referred to as sterilization) using a disinfectant or germicide have been carried out in many cases.
The bleaching effect and sterilization, effect of the composition used in such applications are usually exerted by the oxidizing action. As an oxidizing component which is responsible for such oxidizing actions, hydrogen preroxide-compounds, such as hydrogen peroxide and inorganic peroxides that liberate hydrogen peroxide in water, or depending on the application, chlorine-based compounds such as sodium hypochlorite have been used. In recent years, the washing using hydrogen peroxide or hydrogen peroxide-based compound has been attracting attention from the viewpoint of easy handling or the like.
Conventionally, the use of metal complexes as bleaching auxiliaries to enhance the bleaching effect and sterilization effect of hydrogen peroxide or hydrogen peroxide-based compound and to promote the oxidizing action of hydrogen, peroxide has been known. Since the method of producing these metal complexes generally requires prolonged standing in a cool dark place, it was undesirable in terms of cost and yield when the industrial production was envisaged.
For these problems, a method of producing a bleaching auxiliary in which a complex of a chelating agent or polycarboxylic acid-based polymer and a copper and/or manganese compound is formed in a polar solvent followed by the removal of polar solvent by distillation has been proposed (for example, Patent Document 1). According to the invention disclosed in Patent Document 1, by producing a bleaching auxiliary that exhibits excellent bleaching effect in trace amounts easily and economically, industrial production of bleaching auxiliary particles containing the bleaching auxiliary has been achieved.

[Citation List]

[Patent Document]

[Patent Document 1] Japanese Unexamined Patent Application, First Publication No. 2009-149748

[Summary of Invention]

[Technical Problem]

Incidentally, hydrogen peroxide increases the oxidizing auction against dirt or microorganisms under alkaline conditions.
For this reason, by using hydrogen peroxide or hydrogen peroxide-based compound and an alkali metal salt that exhibits basicity in aqueous solutions (hereinafter, sometimes referred to as a basic alkali metal salt) in combination, the bleaching effect and sterilization effect of hydrogen peroxide can be enhanced.
However, when powders of a metal salt that constitutes a complex, a chelating agent and a basic alkali metal salt are simply mixed and added to water, the solubility of this powder mixture in water is reduced to in extremely low level.
In addition, although a decrease in the water solubility can be suppressed by forming a complex of a metal salt and chelating agent in advance as in the technique described in Patent Document 1, the technique of Patent Document 1 is disadvantageous in terms of manufacturability since it requires additional proceses and facilities for the complex formation, removal of solvent by distillation, and the like.
Accordingly, an object of the present invention is to achieve a method for producing a powder mixture which is capable of easily producing a powder mixture that exhibits excellent solubility in water even when containing a basic alkali metal salt and a metal salt.

[Solution to Problem]

As a of intensive studies, the inventors of the present invention obtained the following findings. When a basic alkali metal salt is added in the form of an aqueous solution to the compositions of detergents, bleaching agents or the like, the processing liquid in which these compositions are dissolved becomes basic, thereby promoting the oxidizing action of hydrogen peroxide. Furthermore, by using a specific metal salt in combination with a specific chelating agent, the metal ions generated from the aforementioned metal salt form a complex with the aforementioned chelating agent in the processing liquid so that it is possible to promote the oxidizing action of hydrogen peroxide by this complex. On the other hand, the metal salt forms an insoluble basic salt on the particle surface thereof in the basic processing liquid, thereby significantly reducing the solubility.
Based on these findings, the investors of the present invention discovered that a powder mixture exhibiting excellent solubility can be obtained by mixing a basic alkali metal salt, the aforementioned metal salt and the aforementioned chelating agent under a certain condition, which has led to the completion of the present invention.

That is, a method for producing a powder mixture according to the present invention is a method for producing a powder mixture containing an alkali metal salt that exhibits basicity in an aqueous solution (component (A)); at least one type of metal salt selected from the salts of copper, manganese, iron, cobalt and zinc (component (B)); and a compound represented by the following general formula (1) (component (C)), including spraying and mixing an aqueous solution of metal which is an aqueous solution of the aforementioned component (B) with a powder of the aforementioned component (A), and then mixing a powder of the aforementioned component (C) therewith.

[Chemical Formula 1]

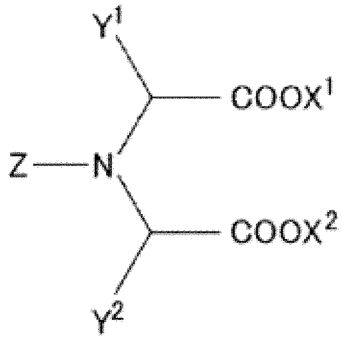

···(1)

[In the formula, each of $Y^1$ and $Y^2$ independently represents a hydrogen atom, an alkyl group of 1 to 3 carbon atoms, $-CH_2-COOX^3$, $-CH(OH)-COOX^4$, $-CH_2CH_2-COOX^5$,$-CH_2CH_2-OH$ or $-CH_2-OH$; Z represents a hydrogen atom, an alkyl group of 8 to 16 carbon atoms, $-CH_2-COOX^6$ or $-CH_2CH_2-OH$; each of $X^1$ to $X^6$ independently represents a hydrogen atom, an alkali metal atom, an alkaline earth metal atom or a cationic ammonium group.]

The aforementioned component (B) is preferably at least one type of metal salt selected from sulfates, nitrates, phosphates, acetates and halides. Further, it is more preferable to add at least one type of compound selected from glycine, citric acid and the salts thereof (component (D)) to the aforementioned aqueous solution of metal. In addition, it is preferable that the aforementioned powder mixture be used in at least one type of application selected from bleaching and sterilization, together with hydrogen peroxide or an inorganic peroxide that releases hydrogen peroxide in water.

[Advantageous Effects of Invention]

According to the present invention, a powder mixture that exhibits excellent solubility in water even when containing a basic alkali metal salt and a metal salt can be easily produced.

[Brief Description of Drawings]

FIG. 1 is a process flow diagram illustrating a method for producing a powder mixture according to the present invention.
FIG. 2 is a process flow diagram illustrating a method for producing a powder mixture in comparative Example.

FIG. 3 is a process flow diagram illustrating a method for producing a powder in Comparative Example,

[Description, of Embodiments]

(Powder mixture)

A powder mixture of the present invention contains a component (A), component (B) and component (C).

The average particle diameter of powder mixture (D50% by mass) is not particularly limited, although it is preferably from 50 to 800 μm, and more preferably from 100 to 600 μm. When it is less than 50 μm, dusting is likely to occur, which tends to make the handling complicated. When it is more than 800 μm, the solubility in water tends to decrease.

It should be noted that in the present description, the average particle diameter (D50% by mass) is a value obtained by the method to determine a particle size distribution using a sieve as follows, followed by calculation from the particle size distribution,

First, a classification operation is conducted on the object to be measured (sample) using 9 stages of sieves with mesh sizes of 1,680 μm, 1,410 μm, 1,190 μm, 1,000 μm, 710 μm, 500 μm, 350 μm, 250 μm and 149 μm respectively, and a receiving pan. The classification operation, is conducted by first stacking the 9 stages of sieves on top of the receiving pan so that the mesh size gradually increases upward, and then placing 100 g/test of the sample on top of the uppermost sieve with a mesh size of 1,680 μm, and subsequently placing a lid on the sieve structure, attaching the sieve structure to a low-tap sieve shaker (manufactured by Iida-seisakusho Japan Corporation; tapping: 156 repetitions/minute, rolling: 290 repetitions/minute), shaking the sample for 10 minutes, collecting the sample retained on each of the sieves and on the receiving pan, and then measuring the mass of each sample.

The mass frequency of the sample is accumulated from the receiving pan up through each sieve, the mesh size of the first sieve where the accumulated mass frequency reaches at least 50% is termed "a μm", the mesh size of the sieve one stage larger than a μm is termed "b μm", the accumulated value for the mass frequency from the receiving pan through to the sieve of a μm is termed "c%", and the mass frequency of the sample retained on the mesh of a μm is termed "d%". The average particle size (D50% by mass) is then calculated using the formula (i) shown below.

[Formula 1]

$$\text{Average particle diameter (D50\% by mass)} = 10^{[50-\{c-d/(\log b-\log a)\times\log b\}]/\{d/(\log b-\log a)\}} \quad \text{(i)}$$

<Component (A): alkali metal salt exhibits basicity in aqueous solution>

A component (A) is an alkali metal salt that exhibits basicity in an aqueous solution (hereafter, sometimes referred as a "basic alkali metal salt"). A processing liquid can be made basic by incorporating the component (A) in a powder mixture.

Examples of the component (A) include inorganic salts having an alkali metal including sodium and potassium as a counter ion, such as carbonates, hydrogen carbonates, borates, phosphates, silicates and hydroxides, and organic salts having an alkali metal as a counter ion, such as acetates. Of these, from the viewpoint of improving the cleaning performance of a detergent to which the powder mixture of the present invention has been applied, carbonates, hydrogen carbonates, silicates and hydroxides are preferred, sodium carbonate, potassium carbonate, sodium hydrogen carbonate, sodium silicate and potassium silicate are more preferred from the viewpoint of storage stability, and sodium carbonate is even more preferred.

The content of the component (A) in the powder mixture is not particularly limited, although it is prefererably from, for example, 60 to 98% by mass, more preferably from 80 to 98% by mass, and particularly preferably from 83 to 95% by mass. If it is more than 98% by mass, the outer appearance may be poor when the powder mixture is stored, and if it is less than 60% by mass, the solubility of the mixture after storage tends to be poor.

<Component (B): metal salt>

A component (B) is at least one type of metal salt selected from salts of copper, manganese, iron, cobalt and zinc, which is water-soluble. By containing the component (B), the metal ion generated from the component (B) in the

processing liquid and the - COO- moiety of the component (C) which will be described later or the nitrogen atom of a secondary or tertiary amine form a complex. Further, when hydrogen peroxide or hydrogen peroxide-based compound is used in combination with the powder mixture, this complex functions as an oxidation catalyst to promote the oxidizing action of hydrogen peroxide. The expression "water-soluble" means that the solubility of a substance in 100 mL of purified water at 20°C is 1 g or more.
As the component (B), inorganic salts having copper, manganese, iron, cobalt or zinc as a counter ion, such as sulfates, nitrates, phosphates, acetates and halides are preferred, and sulfates and halide are more preferred from the viewpoint of water-solubility. The component (B) may be an anhydride or may be a hydrate.
In addition, from the viewpoints of promoting the oxidizing action of hydrogen peroxide and improving the bleaching power and/or germicidal power, the component (B) is preferably a copper salt, more preferably sulfates and halides of copper due to satisfactory water-solubility, and copper (II) sulfate or copper (II) chloride is particularly preferred.
The content of the component (B) in the powder mixture is not particularly limited, although it is preferably from 0.01 to 1% by mass on the anhydride basis. If it is more, than 1% by mass, the outer appearance stability may be poor when the powder mixture is stored. When it is less than 0.01% by mass, when hydrogen peroxide or hydrogen peroxide-based compound is used in combination with the powder mixture, promotion of the oxidizing action of hydrogen peroxide may be unsatisfactory.

<Component (C): chelating agent>

A component (C) is represented by the following general formula (1). In the component (C), -COOX (X is any one of $X^1$ to $X^6$) is converted to -COO- by ionization in water, and this -COO- moiety or the nitrogen atom of a secondary or tertiary amine forms a complex willi metal ions that are released from the component (B), Further, when hydrogen peroxide or hydrogen peroxide-based compound is used in combination with the powder mixture, this complex functions as an oxidition catalyst to promote the oxidizing action of hydrogen peroxide.
[Chemical Formula 2]

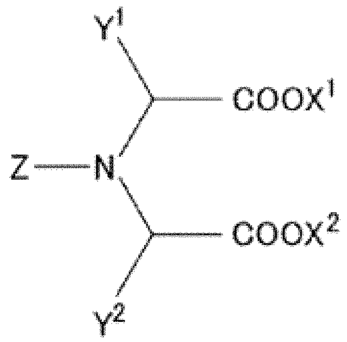

···(1)

[In the formula, each of $Y^1$ and $Y^2$ independently represents a hydrogen atom, an alkyl group of 1to 3 carbon atoms, $-CH_2-COOX^3$, $-CH(OH)-COOX^4$, $-CH_2CH_2COOX^5$, - $CH_2CH_2-OH$ or $-CH_2-OH$; Z represents a hydrogen atom, an, alkyl, group of 8 to 16 carbon, atoms, $-CH_2-COOX^6$ or $-CH_2CH_2-OH$; each of $X^1$ to $X^6$ independently represents a hydrogen atom, an alkali metal atom, an alkaline earth metal atom or a cationic amnonium group.]
In the formula (1), examples of the alkali metal atom for $X^1$ to $X^6$ include sodium and potassium.
Examples of the alkaline earth metal atom include calcium and magnesium. It should be noted that the alkaline earth metal atom for $X^1$ to $X^6$ is equivalent to half an atom (1/2 atom). For example, when $X^1$ represents calcium,$-COOX^1$ will be "$-COO-1/2(Ca^{2+})$".
Examples of the cationic ammonium include primary to tertiary ammonium ions in which I to 3 of the hydrogen atoms (H) of ammonium ($NH_4^+$) have been substituted with an organic group; and a quaternary ammonium ion in which all of H of ammonium have been substituted with an organic group. Here, primary to tertiary ammonium ions refer to cations in which $H^+$ is bonded to the nitrogen atom of primary to tertiary amines.
Examples of the organic group for substituting the H of the ammonium include an alkanol group and an alkyl group. The number of carbon atoms within the alkanol group is preferably 1 to 3. The number of carbon atoms within the alkyl group is preferably 1to 3.
Specific examples of the primary to tertiary ammonium ions include those in which $H^+$ is added to the nitrogen atom of

alkanolumines such as monoethanolamine and diethanolamine. Here, alkanolamines refer to hydroxyalkylimines. Specific examples of the quaternary ammonion ion include tetramethylammonium, tetraethylammonium and tetra-n-butylammonium.

Preferred examples for the component (C) include the following (C-1) to (C-9).

(C-1): A compound in which $Y^1$ = H, $Y^2$ - H, Z = $CH_2$-COO$X^6$, $X^1$ = Na, $X^2$ = Na and $X^6$ = Na (trisodium nitrilotriacetate, hereinafter abbreviated as NTA).
(C-2); A compound in which $Y^1$ = H, $Y^2$ = $CH_3$, Z = $CH_2$-COO$X^6$, $X^1$ = Na, $X^2$ = Na and $X^6$ = Na (trisodium methylglycine diacetate, hereinafter abbreviated as MGDA).
(C-3): A compound in which $Y^1$ = $CH_2$-COO$X^3$, $Y^2$ = $CH_2$-COO$X^3$, Z = H, $X^1$ = Na, $X^2$ = Na and $X^3$ = Na (tetrasodium imminodisuccinate, hereinafter abbreviated as IDS).
(C-4): A compound in which $Y^1$ = $CH_2$,-COO$X^3$, $Y^2$ = CH(OH)-COO$X^4$, Z = H, $X^1$ = Na, $X^2$ = Na, $X^3$ = Na and $X^4$ = Na (tetrasodium 3-hydroxy-2,2'-imminodisuccinate, hereinafter abbreviated as HIDS).
(C-5): A compound in which $Y^1$ = $CH_2$-COO$X^3$, $Y^2$= H, Z=$CH_2$-COO$X^6$,$X^1$ = Na, $X^2$= Na, $X^3$ = Na and $X^6$ = Na (tetrasodium L-aspartate-N,N-diacetate, hereinafter abbreviated as ASDA).
(C-6): A compound in which Y' = $CH_2CH_2$-COO$X^5$, $Y^2$= H, Z = $CH_2$-COO$X^6$, $X^1$ = Na, $X^2$ = Na, $X^5$ = Na and $X^6$ = Na (tetrasodium glutamate-N,N-diacetate, hereinafter abbreviated as GLDA).
(C-7): A compound in which $Y^1$ = H, $Y^2$ = H, Z = H, $X^1$ = Na and $X^2$ = Na (disodium iminodiacetate, hereinafter abbreviated as IDA).
(C-8): A compound in which $Y^1$ = H, $Y^2$ - H, Z = $CH_2CH_2$-OH,$X^1$= Na and $X^2$ = Na (disodium hydroxyethyL imiodiacetate, hereinafter abbreviated as HIDA).
(C-9): A compound in which $Y^1$ = H, $Y^2$ = H, Z = an alkyl group of 12 carbon atoms, $X^1$ = Na and $X^2$ = Na (sodium laurylaminodiacetate, hereinafter abbreviated as $C_{12}$IDA).

Of these, NTA, MGDA and IDS are preferred from the viewpoints of favorable mixing in the form of powders, and promoting the oxidizing action of hydrogen peroxide and improving the bleaching power and/or germicidal power.

The amount of component (C) incorporated in the powder mixture is not particularly limited, although it is preferably from 1 to 8% by mass, and more preferably 2 to 5% by mass. When it is less than 1% by mass, the solubility of the powder mixture is poor in some cases. In addition, when the powder mixture is used in combination with hydrogen peroxide or hydrogen peroxide-based compound, the decomposition of hydrogen peroxide in water is accelerated excessively, which may result in poor bleaching power or germicidical power. If the amount is more than 8% by mass, the outer appearance stability may be poor when the powder mixture is stored. In addition, from the viewpoint of suppressing the excessive decomposition of hydrogen peroxide while achieving satisfactory bleaching power or germicidal power when used in the processing together with hydrogen peroxide or hydrogen peroxide-based compound, the molar ratio represented by the expression, (amount of component (C) / amount of component (B)) is preferably from 3.0 to 20, and more preferably from 5.0 to 15.

<Component (D): glycine, citric acid and salts thereof>

A component (D) is at least one type of compound selected from glycine, citric acid and salts thereof. Each of glycine or citric acid may be in an acid form or may be a salt having an alkali metal ion as a counter ion. In addition, the component (D) may be an anhydride or may be a hydrate.
The content of the component (D) in the powder mixture is preferably from 0.01 to 1% by mass more preferably from 0.05 to 0.5% by mass, and particularly preferably from 0.1 to 0.3% by mass. When it is less than 0.01% by mass, the outer appearance stability may be poor when the powder mixture is stored. If it is more than 1% by mass, when the powder mixture is used in combination with hydrogen peroxide or hydrogen peroxide-based compound, the decomposition of hydrogen peroxide in water is accelerated excessively, which may result in poor bleaching power or germicidal power.
Furthermore, in order to achieve both of the outer appearance stability when stored and the bleaching and/or germicidal performance, the molar ratio represented by the expression (amount of component (D) / amount of component (B)) is preferably from 1.0 to 3.0.

<Optional components>

Surfactants, bleach activators, inorganic salts, organic salts, polymeric compounds or the like can be added to the powder mixture of the present invention within a range that does not impair the effects of the present invention,

<<Surfactant>>

As a surfactant, known surfactants used in detergents, bleaching agents, germicides, or the like can be used. The type of surfactant can be selected depending on the purpose, and aminoic surfactants, cationic surfactants, nonionic surfactants, amphoteric surfactant or the like can be used.

<<Bleach activator>>

Examples of the bleach activators include sodium octanoyloxybenzene sulfonate, sodium nonanoyloxybenzene sulfonate, sodium decanoyloxybenzene sulfonate, sodium undecanoyloxybenzene sulfonate, sodium dodecanoyloxybenzene sulfonate, octanoyloxybenzoic acid, nonanoyloxybenzoic acid, decanoyloxybenzoic acid, undecanoyloxybenzoic acid, dodecanoyloxybenzoic acid, octanoyloxybenzene, nonanoyloxybenzene, decanoyloxybenzene, undecanoyloxybenzene, dodecanoyloxybenzene and tetraacetyl ethylene diamine.

<<Optional inorganic salt>>

Inorganic salts used as an optional component (hereinafter sometimes referred to as optional inorganic salts) are inorganic salts that are not classified as the component (A), component (B) and hydrogen peroxide-based compounds, and examples thereof include neutral salts such as sodium sulfate and potassium sulfate, crystalline aluminosilicates, and inorganic ammonium salts such as ammonium sulfate and ammonium chloride.

<<Optional organic salt>>

Organic salts used as an optional component (hereinafter sometimes referred to as optional, organic salts) are organic salts that are not classified as the component (A), component (B) and component (D), and examples thereof include hydroxycarboxylates such as hydroxyacetates and tartrates; cyclocarboxylates such as pyromellitates, benzopolycarboxylates and cyclopentanetetracarboxylates, ether carboxylates such as carboxymethyltartronates, carboxymethyloxysuccinates, oxydisuccinates, and tartaric acid mono or disuccinates; benzene sulfonates having a short chain alkyl moiety of 1 to 5 carbon atoms, such as sodium p-toluene sulfonate, sodium xylene sulfonate and sodium cumene sulfonate, sodium benzoates and sodium benzene sulfonates.

<<Polymeric compound>>

Examples thereof include acrylic acid-based polymeric compounds, polyacetal carboxylates, polymers or copolymers of itaconic acid, fumaric acid, tetramethylene-1,2-dicarboxylic acid, succinic acid, aspartic acid and the like; polyethylene glycol; cellulose derivatives such as carboxymethyl cellulose; polyvinylpyrrolidone and derivatives thereof, and silicone oil.

(Production method)

A method for producing a powder mixture according to the present invention will, be described with preference to FIG. 1 below. The method for producing a powder mixture according to the present invention is a method that includes spraying and mixing an aqueous solution of metal which is an aqueous solution of the component (B) with a powder of the component (A) (spraying and mixing step 12), and then mixing a powder of the component (C) therewith (powder mixing step 14).

As shown in FIG. 1, first, an aqueous solution of metal is prepared by dissolving the component (B) in water (dissolution step 10). At time, the component (D) is dissolved in water together with the component (B) as necessary. The method for preparing an aqueous solution of metal is not particularly limited, and examples thereof include a method using a vessel equipped with a stirring blade or the like.

The concentration of the component (B) in the aqueous solution of metal is not particularly limited, although it is adjusted, for example, from 1 to 20% by mass.

Subsequently, the powder of the component (A) is loaded onto a stirring/mixing device, and while stirring the component (A), the aqueous solution of metal is sprayed and mixed with the component (A) (spraying and mixing step 12). At this time, it is possible to load an optional component together with the component (A). Due to spraying and mixing step 12, it is possible to obtain coated particles in which the component (B) is deposited substantially uniformly onto the surface of the particles of component (A) so that the surface of the component (A) has been coated with the component (B).

The degree of coating in these coated particles is such that the ratio of the area onto which the component (B)

has been deposited relative to the surface area of the particles of component (A) (namely, the coverage) is preferably at least 70%, more preferably at least 90%, still more preferably at least 99%, and may even be 100%.
By achieving such a coverage, homogeneous particles with higher solubility can be obtained.

The powder of the component (A) preferably, has a particle diameter of 50 to 1 ,000 μm, and more preferably 100 to 850 μm. When it is less than 50 μm, dusting often occurs during production, making the handling complicated. If it is more than 1,000 μm, the solubitity in water may decline.

As a stirring/mixing device to be used in the spraying and mixing step 12, it is possible to use a conventionally known stirring and mixing device such as a horizontal cylindrical mixing drum and a fluidized bed mixing device.
A stirring rate of stirring/mixing device in the spraying and mixing step 12 can be determined by talking into consideration the amount of component (A) loaded onto the stirring/mixing device, the amount of aqueous solution of metal to be sprayed, or the like.

It is possible to use a conventionally known spray nozzle for the spraying of the aqueous solution of metal.
When spraying the aqueous solution of metal, deposition of the component (B) onto the particles of component (A) can be made more uniform as the droplet diameter is reduced. On the other hand, if the droplet diameter is too small, the sprayed aqueous solution of metal is dispersed, thereby increasing the loss of the aqueous solution of metal. Therefore, the droplet diameter of the aqueous solution of metal in this step is preferably equal to or more than 1 μm and less than 1.000 μm or more, more preferably from 10 to 100 μm, and still more preferably from 20 to 50 μm. When it is less than 1μ m, the loss of the aqueous solution of metal increases. If it is equal to or more than 1,000 μm, lumps of the component (A) tend to form.
The amount of the aqueous solution of metal sprayed in the spraying and mixing step 12 can be determined by taking into account the amount of the component (B) added to the powder mixture or the concentration of the component (B) in the aqueous solution of metal, For example, the ratio (aqueous solution of metal / component (A)) is preferably from 0.01 to 0.1 (mass ratio), and more preferably from 0.02 to 0.06.
When it is less than 0.01, coating of the particles of the component (A) with the component (B) may be unsatisfactory. If it is more than 0.1, the powder mixture is likely to form lumps.

The water content of the coated particles obtained in the spraying and mixing step 12 can be determined within a range where the fluidity of coated particles can be secured, and adjusted to, for example, 10% by mass or less. It should be noted that the water content refers to a value that is measured using a Kett moisture meter (product name, manufactured by Kett Electric Laboratory; infrared moisture meter) at 170°C for 20 minutes.

Then, the coated particles obtained in the spraying and mixing step 12 and a powder of the component (C) where mixed to obtain the powder mixture of the present invention (powder mixing step 14). The method for mixing a powder is not particularly limited. For example, the component (C) may be loaded onto the stirring/mixing device and mixed following the spraying and mixing step 12, or the coated particles may be collected from the stirring/mixing device, and then loaded onto the stirritig/mixing device separately for mixing, along with the component (C).
The particle of the component (C) to be used in the powder mixing step 14 can be determined by taking into account the particle size of coated particles, and adjusted to, for example, from 50 to 1,000 μm.

(Method of use)

A method of using the powder of the present invention includes bleaching and/or sterilization of an object to be treated using a processing liquid in which the powder mixture is dispersed. The object to be is not particularly limited, and examples thereof include food packaging containers made of metal, glass, plastic or the like, rigid articles such as dishes, dentures, toilet bowls and beverage containers, and textile products such as clothing, curtains and carpets.

Examples of the method for processing the object to be treated include a method in which a powder mixture is added to waster to prepare a processing liquid, and the object, to be treated is bleached and/or sterilized by immersing the object to be treated in this processing liquid, or by applying the processing liquid onto the object to be treated. Alternatively, another method can be used, in which a powder mixture is added to water together with a surfactant to prepare a processing liquid, and the object to be treated is and/or sterilized by immersing the object to be treated in this processing liquid, or by applying the processing liquid onto the object to be treated. This is because the powder mixture per se would exhibit a germicidal power if, for example, copper or a salt thereof is used as the component (B).

In addiction, For example, a method can also be used, in which a powder mixture is added to water together with hydrogen peroxide or hydrogen peroxide-based compound to prepare professing liquid, and the object to be treated is bleached and/or sterilized using this processing liquid.
As hydrogen peroxide, for example, a 35% by mass hydrogen peroxide solution which is available industrially can be used. In addition, examples of the hydrogen peroxide-based compound include hydrogen peroxide adducts of inorganic salts such as sodium percarbonate, sodium perborate and sodium perborate trihydrate, and of these, sodium percarbonate is preferred from the viewpoints of usability, solubility, and stability during storage. Sodium percarbonate is an adduct of sodium carbonate and hydrogen peroxide which is represented by the structural formula of $Na_2CO_3 \cdot 3/2H_2O_2$.

Specific examples thereof include "PC-A" manufactured by Nippon Peroxide Co., Ltd. In addition, sodium percarbonate may be those in which the surface has been coated with a coating agent (coated sodium percarbonate) in order to further improve the stability during storage. Examples of the coating agent include a mixture of silicic acid and/or silicate and boric acid and/or borate, and a mixture of a surfactant and an inorganic compound.

When the powder mixture is used in combination with hydrogen peroxide, for example, a hydrogen peroxide solution is prepared as a first liquid, and the powder mixture is dissolved in water to prepare a second liquid. When preparing the second liquid, the powder mixture is rapidly dissolved in water, and also exhibits basicity due to the component (A). In addition, in the second liquid, a complex of the component (B) and the component (C) is formed. Then, the first liquid and second liquid are mixed to prepare a processing liquid. The content of hydrogen peroxide in the processing liquid is preferably from 0.01 to 0.5% by mass. In addition, the content of the powder mixture in the processing liquid is preferably from 0.03 to 0.5% by mass.

Then, the object to be treated is immersed in the processing liquid, or the processing liquid is applied onto the object to be treated. When the processing liquid is brought into contact with the object to be treated, the dirt, stain and microorganisms that are deposited onto the object to be treated are decomposed by the oxidizing action of hydrogen peroxide. At this time, since the processing liquid is basic, the oxidizing action of hydrogen peroxide is promoted. In addition, because the complex of the component (B) with the component (C) is present in the proccessing liquid, the oxidizing action of hydrogen peroxide is further promoted by this complex. As a result, the object to be treated is bleached and/or sterilized.

When the powder mixture is used in combination with a hydrogen peroxide-based compound, for example, the powder mixture and the hydrogen peroxide-based compound are dissolved in water to prepare a processing liquid, and the object to be treated can be bleached and/or sterilized by immersing the object to be treated in this processing liquid, or by applying the processing liquid onto the object to be treated.

As described above, in the method for producing a powder mixture according to the present invention, a powder mixture with favorable solubility in water can be obtained by spraying and mixing an aqueous solution of the component (B) with a powder of the component (A) to prepare coated particles, and then mixing a powder of the component (C) with these coated particles. For this reason, it is possible to promote the oxidizing action of hydrogen peroxide and also to easily produce a powder mixture that exhibits an excellent solubility in water without providing a step to prepare a complex of the component (B) with the component (C) in advance.

Although the mechanism to improve the solubility of the powder mixture in water is not clear, it is presumed as follows. By coating the component (A) with the component (B), when the powder mixture is loaded in water, the component (B) present on the surface of the coated particles and the component (C) are first dissolved in water, faster than the component (A). For this reason, the component (B) and the component (C) immediately form a complex, and it becomes difficult to from a basic salt in the component (B) which is insoluble in water.

Furthermore, because the component (A) is dissolved in water after the component (B) has been dissolved in water, a basic processing liquid can be obtained without generating the residue of the component (B) as a result of dissolution.

As described above, because the powder mixture produced by the present invention contains the components (A) to (C), not only the oxidizing action of hydrogen peroxide is catalytically promoted and a high level of bleaching power and/or germicidal power is achieved when added in trace amounts, but also the solubility in water is satisfactory, so that there is no insoluble matter remaining in the object to be treated.

[Examples]

The present invention will be described in more detail, with reference to a series of examples. However, the present invention is in no way limited by these examples.

(Raw materials used)

The raw materials used in each example are shown below.

<Component (A)>

Sodium carbonate: a reagent (special grade) manufactured by Kanto Chemical Co., Inc., with a particle diameter of 100 to 1,000 μm

Sodium sulfate: a reagent (special grade) manufactured by Kanto Chemical Co., Inc., with a particle diameter of 100 to 1,000 μm

<Component (B)>

Copper sulfate pentahydrate: manufactured by Nippon Mining & Metals Corporation, with a molecular weight of 249.69
Copper chloride dihydrate: a reagent (special grade) manufactured by Kanto Chemical Co., Inc., with a molecular weight of 170.48
Manganese sulfate monohydrate: manufactured by Chuo Denki Kogyo Co., Ltd., with a molecular weight of 169.02
Cobalt sulfate heptahydrate: a reagent (special grade) manufactured by Kanto Chemical Co., Inc., with a molecular weight of 281.10
Zinc sulfate heptahydrate: a reagent (special grade) manufactured by Kanto Chemical Co., Inc., with a molecular weight of 287.55

<Component (C)>

MGDA (trisodium methylglycine diacetate): "Trilon M Granules" manufactured by BASF Japan Ltd., with 80% by mass of pure components and a particle diameter of 63 to 850 μm
NTA (trisodium nitrilotriacetate): "Trilon A92R" manufactured by BASF Japan Ltd., with 92% by mass of pure components and a particle diameter of 63 to 850 μm
IDS (tetrasodium imminodisuccinate): "Baypure CX100" manufactured by Lanxess K.K., with 80% by mass of pure components and a particle diameter of 100 to 850 μm
$C_{12}$-IDA (sodium laurylaminodiacetate): "Nissan Anon LA" manufactured by NOF Corporation, with 100% by mass of pure components and a particle diameter of 63 to 710 μm

<Component (D)>

Glycine: manufactured by Yuki Gosei Kogyo Co., Ltd.
Trisodium citrate dihydrate: manufactured by Fuso Chemical Co., Ltd.

<Hydrogen peroxide or hydrogen peroxide-based compound>

Hydrogen peroxide: a 35% by mass hydrogen peroxide solution, manufactured by Kanto Chemical Co., Inc.
Sodium percarbonate: "PC-A" manufactured by Nippon Peroxide Co., Ltd. (containing 67.5% by mass of sodium carbonate components and 32.5% by mass of hydrogen peroxide components)

<Optional components>

Polyoxyalkylene alkyl ether: a nonionic surfactant "Lionol TDM-90" manufactured by Lion Corporation in which 9 moles of an ethylene oxide group and 2 moles of a propylene oxide group were added (average number of added moles) to tridecanol,

(Examples 1 to 15)

A powder mixture of each example was produced by the production method shown in the process flow diagram of FIG. 1 in accordance with the composition indicated in Tables 1 and 2 so that the total mass was 56 kg. An aqueous solution of metal was prepared by dissolving the component (B) and the component (D) in purified water (dissolution step 10). Subsequently, the component (A) was loaded into a horizontal cylindrical mixing drum (internal volume: 130 L, diameter: 0.6 m) and was stirred at a rotational frequency of 20 rpm (Fr = 0.14) for 2 minutes. Then, using a two-fluid nozzle (manufactured by H. Ikeuchi & Co., Ltd.: SETO0407, injection pressure: 1.2 kg/cm$^2$), the aqueous solution of metal was mixed while being sprayed (droplet diameter: 20 to 50 μm) at a spray speed of 100 mL/min (spraying and mixing step 12). The droplet diameter was measured using a laser light scattering type particle size distribution measuring

device (Mastersizer S manufactured by Malvern Instruments Ltd.). After completion of the spraying, the component (C) was loaded into the horizontal cylindrical mixing drum and mixed at a rotational frequency of 20 rpm for 5 minutes to obtain a powder mixture of each example (powder mixing step 14). For the obtained powder mixture, the solubility and the stability of outer appearance were evaluated, and the results thereof are shown in the tables. It should be noted that the present production method was described as "Production Method I" in the tables.

(Comparative Example 1)

A powder mixture was produced by the production method shown in the process flow diagram of FIG. 2 in accordance with the composition indicated in Table 2 so that the total mass was 56 kg. An aqueous solution of metal was prepared by dissolving the component (B) in purified water (dissolution step 10). Subsequently, the component (A) was loaded into a horizontal cylindrical mixing drum (internal volume: 130 L, diameter: 0,6 m) and was stirred at a rotational frequency of 20 rpm (Fr = 0.14) for 2 minutes.
Then, using a dropping funnel, the aqueous solution of metal was mixed while being added dropwise (droplet diameter: 2 to 4 mm) at a dropping rate of 100 mL/min (dropwise addition mixing step 20). The droplet diameter was measured using a laser light scattering type particle size distribution measuring device (Mastersizer S manufactured by Malvern Instruments Ltd.). After completion of the dropwise addition, the component (C) was loaded into the horizontal cylindrical mixing drum and mixed at a rotational frequency of 20 rpm for 5 minutes to obtain a powder mixture of each example (powder mixing step 14). For the obtained powder mixture, the solubility and the stability of outer appearance were evaluated, and the results thereof are shown in the tables. It should be noted that the present production method was described as "Production Method 2" in the tables.

(Comparative 2)

A powder mixture was produced by the production method shown in the process flow diagram of FIG. 3 in accordance with the composition indicated in Table 2 so that the total mass was 56 kg.
The components (A) to (C) were sequentially loaded into a horizontal cylindrical mixing drum (internal volume: 130 L, diameter. 0.6 m) and were then mixed at a rotational frequency of 20 rpm (Fr = 0. 14) for 5 minutes (powder mixing step 30). For the obtained powder mixture, the solubility and the stability of outer appearance were evaluated, and the results thereof are shown in the tables. It should be noted that the present production method was described as "Production Method 3" in the tables.

(Evaluation method)

<Solubility (products immediately after production and stored products)>

<<Solubility of products after production>>

400 g of tap water was placed in a glass beaker having a volume of 1 L, and the temperature was adjusted to 25°C in a water bath. A stirring bar (cylindrically shaped with a length of 40 mm and a diameter of 8 mm) was placed inside the beaker, and 16 g of the mixture of each example immediately after production (product immediately after production) was loaded thereto with stirring at a rotational frequency of 300 rpm using a magnetic stirrer (HS-50D, manufactured by As One Corporation), and the resulting mixture was stirred for 5 minutes. After the stirring, the presence of dissolution residues in the aqueous solution was visually evaluated. In addition, if there were dissolution residues remaining after 5 minutes of stirring, the stirring was continued for another 5 minutes (10 minutes in total), and the presence of dissolution residues was visually evaluated again. If there were dissolution residues remaining after 10 minutes of stirring, the stirring was continued for another 5 minutes (15 minutes in total), and the presence of dissolution residues was visually confirmed once again. These results were classified into the following evaluation criteria to evaluate the solubility of the products immediately after production.

[Evaluation criteria]

A: Uniformly dissolved and became transparent by 5 minutes of stirring
B: Presence of dissolution residues after 5 minutes of stirring, although uniformly dissolved and became transparent by 10 minutes of stirring
C: Presence of dissolution residues after 10 minutes of stirring, although uniformly dissolved and became transparent

by 15 minutes of stirring

D: Presence of dissolution residues even after 15 minutes of stirring

<<Solubility of stored products>>

1 kg of the produced powder mixture of each example was packed in a plastic bag (a laminate film composed of 15 μm of nylon and 55 μm of a linear low density polyethylene with a size of 250 × 185 mm, manufactured by Takigawa Chemical Industries, Ltd.), and after sealing the bag by heat sealing, stored for once month in a constant temperature and humidity tank at a temperature of 40°C and an RH of 75%. 16 g of the powder mixture following the storage (stored product) was taken out, and the solubility of the stored product was evaluated in the same manner as for the product immediately production.

<Stability of outer appearance>

1kg of the produced powder mixture of each example immediately after production was packed in a plastic bag (a laminate film composed of 15 μm of nylon and 55 μm of a linear low density polyethylene with a size of 250 × 185 mm, manufactured by Takigawa Chemical Industries, Ltd.), and after sealing the bag by heat sealing, stored for one month in a constant temperature and humidity tank at a temperature of 40°C and and RH of 75%. The outer apparance of the powder mixture after storage was evaluated in accordance with the following criteria.

A: No color change at all
B: Almost no color change
C: A slight color change, causing no problem
D: A little color change
E: A significant color change

[Table 1]

| | | | | Example | | | | | | | | | |
|---|---|---|---|---|---|---|---|---|---|---|---|---|---|
| | | | | 1 | 2 | 3 | 4 | 5 | 6 | 7 | 8 | 9 | 10 |
| Production method | | | | 1 | 1 | 1 | 1 | 1 | 1 | 1 | 1 | 1 | 1 |
| Composition (% by mass) | Component (A) | | Sodium carbonate | 92.90 | 92.71 | 72.90 | 92.52 | 92.69 | 82.52 | 92.90 | 83.94 | 94.90 | 84.70 |
| | | | Sodium sulfate | - | - | 20.00 | - | - | 10.00 | - | - | - | - |
| | Aqueous solution of metal | Component (B) | Copper sulfate pentahydrate | 0.31 | 0.31 | 0.31 | - | - | - | - | 0.31 | 0.25 | 1.8 |
| | | | (anhydride basis) | (0.20) | (0.20) | (0.20) | | | | | (0.20) | (0.16) | 11.150 |
| | | | Copper chloride dihydrate | - | - | - | 0.31 | - | - | - | - | - | - |
| | | | (anhydride basis) | | | | (0.24) | | | | | | |
| | | | Mangnese sulfate | - | - | - | - | 0.31 | - | - | - | - | - |
| | | | (anhydride basis) | | | | | (0.28) | | | | | |
| | | | Cobalt sulfate heptahydrate | - | - | - | - | - | 0.31 | - | - | - | - |
| | | | (anhydride basis) | | | | | | (0.17) | | | | |
| | | | Zinc sulfate heptahydrate | - | - | - | - | - | - | 0.31 | - | - | - |
| | | | (anhydride basis) | | | | | | | (0.17) | | | |
| | | Component (D) | Glycine | - | 0.19 | - | - | 0.21 | - | - | - | - | - |
| | | | Citric acid | - | - | - | - | - | - | - | - | - | - |
| | | Optional component | Polyoxyalkylene alkylene ether | - | - | - | 0.38 | - | 0.38 | - | - | - | - |
| | | | Purified water | 3.04 | 3.04 | 3.04 | 3.04 | 3.04 | 3.04 | 3.04 | 12 | 1.1 | 7.5 |
| | | (Sum of aqueous solution of metal) | | (3.35) | (3.54) | (3.35) | (3.73) | (3.56) | (3.73) | (3.35) | (12.31) | (1.35) | (9.30) |

(continued)

| | | | Example 1 | 2 | 3 | 4 | 5 | 6 | 7 | 8 | 9 | 10 |
|---|---|---|---|---|---|---|---|---|---|---|---|---|
| | Component (C) | MGDA | 3.75 | 3.75 | 3.75 | 3.75 | 3.75 | 3.75 | 3.75 | 3.75 | 3.75 | 6 |
| | | NTA | - | - | - | - | - | - | - | - | - | - |
| | | IDS | - | - | - | - | - | - | - | - | - | - |
| | | $C_{12}$-IDA | - | - | - | - | - | - | - | - | - | - |
| | Total | | 100 | 100 | 100 | 100 | 100 | 100 | 100 | 100 | 100 | 100 |
| Evaluation | Solubility | Product immediately after production | A | A | A | A | A | A | A | A | A | A |
| | | Stored product | A | A | A | A | A | A | A | B | A | A |
| | Outer appearance stability | | B | A | B | B | A | B | B | B | C | C |

[Table 2]

| | | | | Example | | | | | Comparative Example | |
|---|---|---|---|---|---|---|---|---|---|---|
| | | | | 11 | 12 | 13 | 14 | 15 | 1 | 2 |
| Production method | | | | 1 | 1 | 1 | 1 | 1 | 2 | 3 |
| Composition (% by mass) | Component (A) | | Sodium carbonate | 93.49 | 87.15 | 93.44 | 93.44 | 93.44 | 93.44 | 95.94 |
| | | | Sodium sulfate | - | - | - | - | - | - | - |
| | Aqueous solution of metal | Component (B) | Copper sulfate pentahydrate | 0.31 | 0.35 | 0.31 | 0.31 | 0.31 | 0.31 | 0.31 |
| | | | (anhyddride basis) | 0.20) | (0.20) | (0.20) | (0.20) | (0.20) | (0.20) | (0.20) |
| | | | Copper chloride dihydrate | - | - | - | - | - | - | - |
| | | | Manganese sulfate monohydrate | - | - | - | - | - | - | - |
| | | | Cobalt sulfate heptahydrate | - | - | - | - | - | - | - |
| | | | Zinc sulfate heptahydrate | - | - | - | - | - | - | - |
| | | Component (D) | Glycine | - | - | - | - | - | - | - |
| | | | Citric acid | - | | | - | - | - | - |
| | | Optional component | Polyoxyalkylen alkyl ether | - | - | - | - | - | - | - |
| | | | Purified water | 5.00 | 2.50 | 2.50 | 2.50 | 2.50 | 2.50 | - |
| | | (Sum of aqueous solution of metal) | | (5.31) | (2.85) | (2.81) | (2.81) | (2.81) | (2.81) | - |
| | Component (C) | | MGDA | 1.20 | 10.00 | - | - | - | 3.75 | 3.75 |
| | | | NTA | - | - | 3.75 | - | - | - | - |
| | | | IDS | - | - | - | 3.75 | - | - | - |
| | | | $C_{12}$-IDA | - | - | - | - | 3.75 | - | - |
| | Total | | | 100 | 100 | 100 | 100 | 100 | 100 | 100 |
| Evaluation | Solubility | Product immediately after production | | B | A | B | B | B | C | D |
| | | Stored product | | B | A | B | B | B | D | D |
| | Outer appearance stability | | | B | C | C | C | C | B | B |

As in Tables 1 and 2, Examples 1 to 15 to which the present invention had been applied exhibited excellent solubility in water. examples 2 and 5 in which the component (D) was added to the metal aqueous solution exhibited superior stability in the outer appearance compared to other examples.
On the other hand, in Comparative Example in which the coated particles were prepared by dropwise addition and mixing, the solubility of product immediately after production, was evaluated as "C", and the solubility, of stored product was evaluated as "D". In addition, in Comparative Example 2 in which the powders of the components (A) to (C) were mixed, the solubility of product immediately after production and the solubility of stored product were both evaluated as "D".
From the above results, it became clear that a powder mixture that exhibits excellent solubility in water can be easily produced by applying the present invention.
[Table 3]

| | | Examples | | | | |
|---|---|---|---|---|---|---|
| | | 16 | 17 | 18 | 19 | 20 |
| Type of power mixture | | Powder mixture of Example 1 | Powder mixture of Example 2 | Powder mixture of Example 5 | Powder mixture of Example 6 | Powder mixture of Example 7 |
| Composition of processing liquid | Water | 200 g | 200 g | 200 g | 200 g | 200 g |
| | Powder mixture | 0.40 g | 0.40 g | 0.40 g | 0.40 g | 0.40 g |
| | 35% hydrogen peroxide<br>(Pure component of hydrogen peroxide) | 1.5 g<br>(0.53 g) | -<br>- | 1.5 g<br>(0.53 g) | 1.5 g<br>(0.53 g) | 1.5 g<br>(0.53 g) |
| | Sodium percarbonate<br>(Pure component of hydrogen peroxide) | -<br>- | 1.625 g<br>(0.53 g) | -<br>- | -<br>- | -<br>- |
| Evaluation | Bleaching power | B | B | B | B | NT |
| | Germicidal power | B | B | NT | NT | B |

(Exemples 16 to 20)

In accordance with the composition indicated in Table 3, the processing liquid of each example was prepared. For the processing liquid of each example, the bleaching power and the germicidal power were evaluated, and the results thereof are shown in Table 3. In the table. "NT" indicates not evaluated.

(Evaluation method)

<Bleaching power>

The bleaching power was evaluated by the bleaching power for removing a curry stain.
Bon Curry, Gold (medium hot) (product name, manufactured by Otsuka Foods Co., Ltd.) was filtered through a gauze, and the filtrate was poured into a stainless steel vat. Cotton cloth (plain woven cotton fabric, 100 count) was immersed therein for about an hour and then brushed to remove the excessively deposited dirt, and air-dried overnight. This cotton cloth on which a curry stain had deposited was cut into a 10 cm × 10 cm square, and the resultant was used as a stained cloth.
6 sheets of stained cloth were immersed in the processing liquid of each example, and were allowed to stand for 5

minutes. Then, the stained cloth was loaded onto the Terg-O-tometer (manufactured by United States Testing Company, Inc.), and after adding 0.9 L of tap water at 25°C (with a hardness of 3DH) and stirring the resultant for 10 minutes at 120 rpm, the resultant was transferred to a twin-tub washing machine (CW-C30A1 model, manufactured by Mitsubishi Electric Corporation) and then dehydrated for 1 minute. Thereafter, the resultant was rinsed with running water for 1 minute, dehydrated for 1 minute, and then air dried. The cotton cloth before the deposition of curry strains was used as an unstained cloth, and the stained cloth after the processing was used as a washed cloth. For each of the unstained cloth, stained cloth (before processing) and washed cloth, Z values (reflectance) were measured using a spectroscopic color difference meter ("SE2000" manufactured by Nippon Derishoku Industries Co., Ltd.), and the bleaching rate (%) was calculated by the following equation (I).

[Formula 2]

$$\text{Bleaching rate (\%)} = [\{(\text{Z value of stained cloth}) - (\text{Z value of washed cloth})\} / \{(\text{Z value of stained cloth}) - (\text{Z value of unstained cloth})\}] \times 100 \quad \text{(I)}$$

The determined bleaching rate (%) (the average value of 6 sheets) was classified into the following evaluation criteria to evaluate the bleaching power on the curry stain.

<<Evaluation criteria>>

A: Bleaching rate of 40% or more
B: Bleaching rate of 35% or more and less than 40%
C: Bleaching rate of 30% or more and less than 35%
D: Bleaching rate of less than 30%

<Evatuation of germicidal power>

The power was evaluated by a method employing a bacterial suspension of *Escherichia coli (E. coli*) cells. To 9.9 mL of the processing liquid of each example, 0.1 mL of the mother liquor of *E. coli* suspension prepared so that the number of bacterial cells was $1 \times 10^6$cells/mL (NBRC12732, Organization name: Biological Resource Center, National Institute of Technology and Evaluation) was added to prepare a test solution.
After stirring this test solution for 15 seconds, 1.0 mL of the test solution was collected and added to 9.0 mL of SCDLP medium of (Soybean-Casein Digest Broth with Lectin & Polysorbate 80, manufactured by Wako Pure Chemical Industries, Ltd.) to prepare a 10-fold diluted solution. The operation to further dilute the obtained diluted solution by 10 times was repeated twice to obtain 10- to 1,000-fold diluted solutions.
A 1.0 mL aliquot was collected in a petri dish from of these dilutions, and about 15 mL of the dissolved standard agar medium (manufactured by Wako Pure Chemical Industries, Ltd.) was added thereto and mixed, and the resulting mixture was cultured for 2 days at 37°C, Then, those having from 30 to 300 colonies were selected, and the number of viable cells was determined by counting the number of colonies. The difference between the logarithmic value of initial cell number ($1 \times 10^6$ cell/mL) and the logarithmic value of the number of viable cells after the test was defined as ΔLog, and evaluation was carried out by the following evaluation criteria.

<<Evaluation criteria>>

A: ΔLog value of 3 or more
B: ΔLog value of 2 or more and less than 3
C: ΔLog value of 1 or more and less than 2
D: ΔLog value of less than 1

As shown in Table 3, the processing liquids in which the powder mixture of Example 1, 2, 5 or 6 and hydrogen peroxide or hydrogen peroxide-based compound were added exhibited excellent bleaching power.
In addition, the processing liquids in which the powder mixture of Example 1, 2 or 7 and hydrogen peroxide or hydrogen peroxide-based compound were added exhibited excellent germicidal power.
From these results, it became clear that the powder mixture in which a copper salt was used as the component (B) exhibited excellent bleaching power and germicidal power.

[Industrial Applicability]

According to the present invention, a powder mixture that exhibits excellent solubility in water even when containing a, basic alkali metal salt and a metal salt can be easily produced.

[Reference Signs List]

10: Dissolution step
12: Spraying and mixing step
14: Powder mixing step

**Claims**

1. A method for producing a powder mixture which comprises an alkali metal salt that exhibits basicity in an aqueous solution (component (A)); at least one type of metal salt selected from salts of copper, manganese, iron, cobalt and zinc (component (B)); and a compound represented by the following general formula (1) (component (C)),
the method comprising: spraying mixing an acqueous solution of metal which is an aqueous solution of said component (B) with a powder of said component (A); and then
mixing a powder of said component (C) therewith:

[Chemical Formula 1]

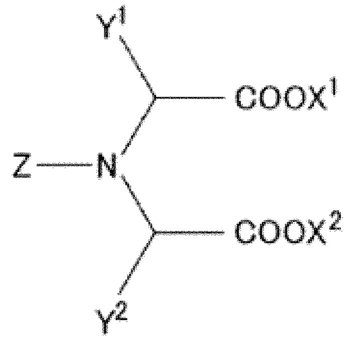

···(1)

wherein each of $Y^1$ and $Y^2$ independently represents a hydrogen atom, an alkyl group of 1 to 3 carbon atoms, $-CH_2-COOX^3$, $-CH(OH)-COOX^4$, $-CH_2CH_2-COOX^5$,$-CH_2CH_2-OH$ or $-CH_2-OH$; Z represents a hydrogen atom, an alkyl group of 8 to 16 carbon atoms, $-CH_2-COOX^6$ or $-CH_2CH_2-OH$; each of $X^1$ to $X^6$ independently represents a hydrogen, atom, an alkali metal atom an alkaline earth metal atom or a cationic ammonium group.

2. The method for producing a powder mixture according to Claim 1,
wherein said component (B) is at least one type of metal salt selected from sulfates, nitrates, phosphates, acetates and halides.

3. The method for producing a powder mixture according to Claim 1 or 2, further comprising adding at least one type of compound selected from glycine, citric acid and salts thereof (component (D)) to said aqueous solution of metal.

**4.** The method for producing a powder mixture according to any one of Claims 1 to 3, wherein said powder mixture is used in at least one type of application selected from and sterilization, together with hydrogen peroxide or an inorganic peroxide that releases hydrogen peroxide in water.

FIG. 1

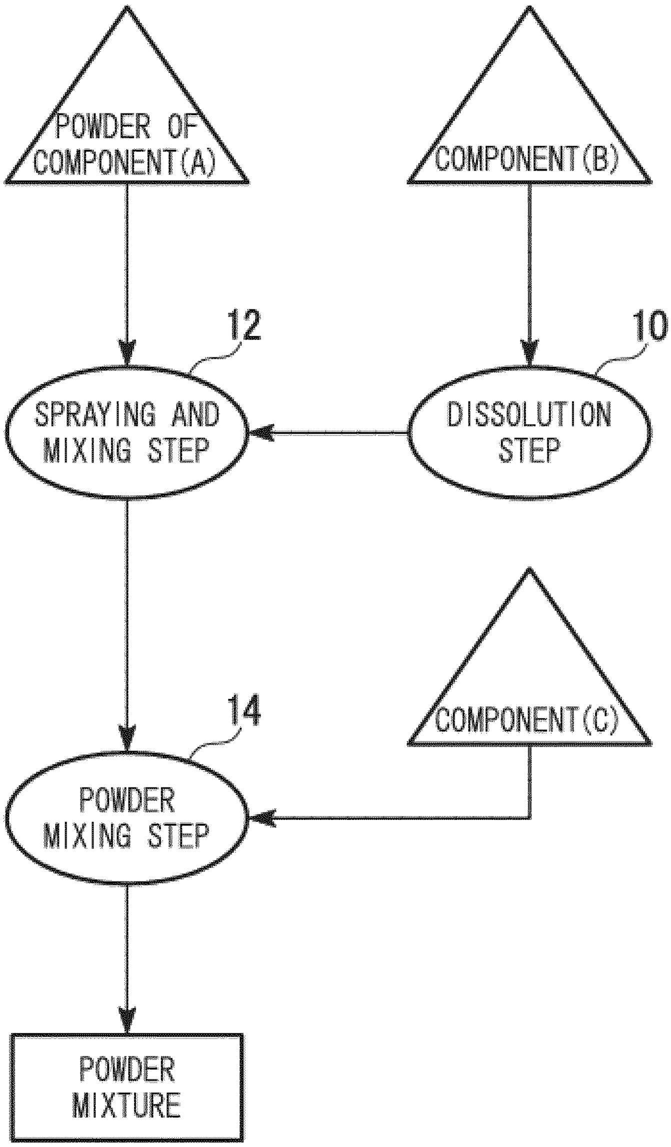
POWDER OF COMPONENT(A)
COMPONENT(B)
12
10
SPRAYING AND MIXING STEP
DISSOLUTION STEP
COMPONENT(C)
14
POWDER MIXING STEP
POWDER MIXTURE

FIG. 2

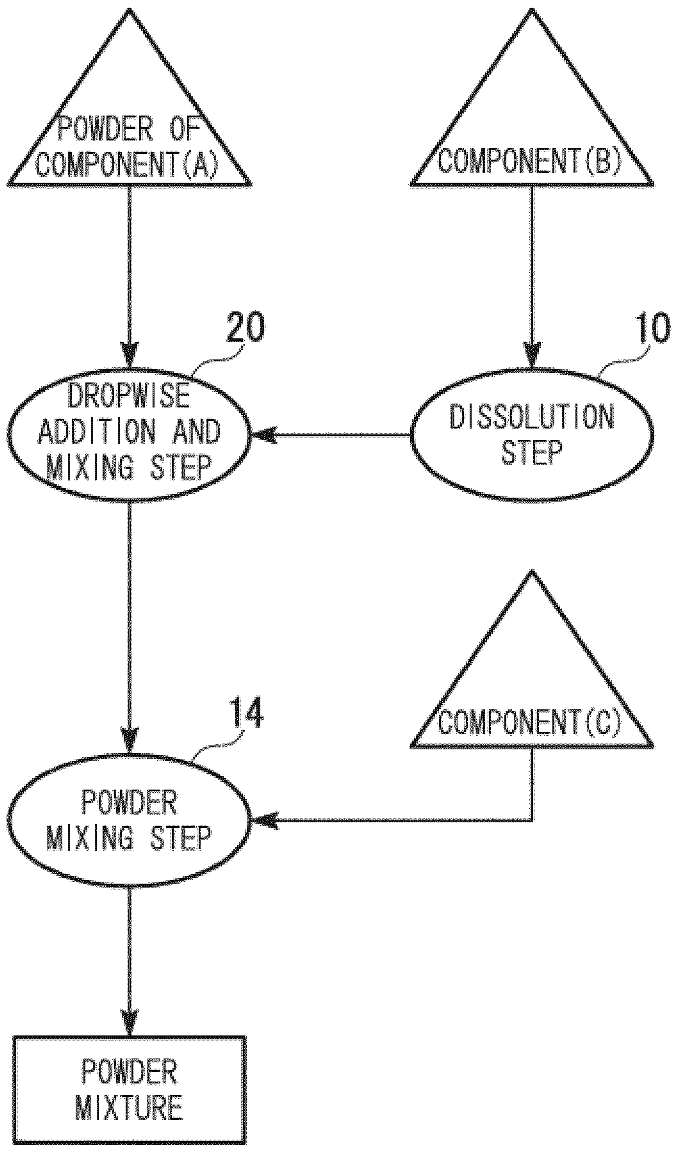
POWDER OF COMPONENT(A)
COMPONENT(B)
20
10
DROPWISE ADDITION AND MIXING STEP
DISSOLUTION STEP
COMPONENT(C)
14
POWDER MIXING STEP
POWDER MIXTURE

FIG. 3

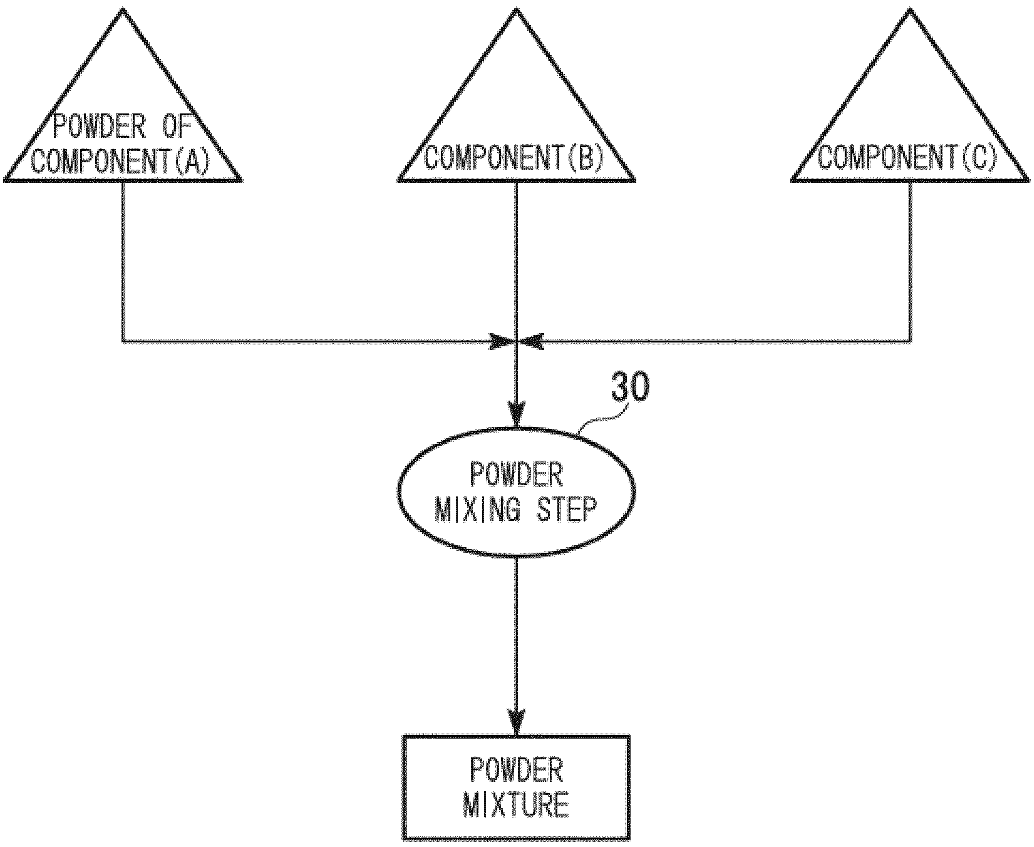
POWDER OF COMPONENT(A)
COMPONENT(B)
COMPONENT(C)
30
POWDER MIXING STEP
POWDER MIXTURE

**INTERNATIONAL SEARCH REPORT**

International application No.
PCT/JP2011/061644

A. CLASSIFICATION OF SUBJECT MATTER
*C11D11/00*(2006.01)i, *A01N25/00*(2006.01)i, *A01N25/12*(2006.01)i, *A01N59/00*(2006.01)i, *A01P3/00*(2006.01)i, *C11D7/10*(2006.01)i, *C11D7/32*(2006.01)i, *C11D17/06*(2006.01)i

According to International Patent Classification (IPC) or to both national classification and IPC

B. FIELDS SEARCHED

Minimum documentation searched (classification system followed by classification symbols)
C11D11/00, A01N25/00, A01N25/12, A01N59/00, A01P3/00, C11D7/10, C11D7/32, C11D17/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2009/078459 A1 (Lion Corp.), 25 June 2009 (25.06.2009), claims; paragraphs [0025], [0040]; examples & JP 2009-149746 A & US 2010/0267602 A & EP 2233558 A1 & KR 10-2010-0097135 A | 1-4 |
| A | JP 2009-155292 A (Lion Corp.), 16 July 2009 (16.07.2009), claims; paragraph [0115]; examples (Family: none) | 1-4 |
| A | JP 2009-155578 A (Lion Corp.), 16 July 2009 (16.07.2009), claims; paragraph [0099]; examples (Family: none) | 1-4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 July, 2011 (11.07.11) | 02 August, 2011 (02.08.11) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No. PCT/JP2011/061644

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-149748 A (Lion Corp.), 09 July 2009 (09.07.2009), claims; paragraph [0026]; examples (Family: none) | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010117395 A
- JP 2009149748 A